Europäisches Patentamt

(19) European Patent Office

Office européen des brevets

(11) Publication number: **0 045 923**
**B1**

(12) EUROPEAN PATENT SPECIFICATION

(45) Date of publication of patent specification: **21.11.84**

(51) Int. Cl.³: **H 04 L 27/22**

(21) Application number: **81106055.7**

(22) Date of filing: **02.08.81**

(54) Digital receiver for four-phase differential modulated signals.

(30) Priority: **07.08.80 IT 6826280**

(43) Date of publication of application:
**17.02.82 Bulletin 82/07**

(45) Publication of the grant of the patent:
**21.11.84 Bulletin 84/47**

(84) Designated Contracting States:
**DE FR GB NL SE**

(56) References cited:
**US-A-3 535 452**

**INTERNATIONAL JOURNAL OF ELECTRONICS,
vol. 47, no. 6, December 1979, London, GB
UNERDEM: "A digital implementation of the
coherent demodulator for 4-phase DPSK
signals", pages 593-597**

(73) Proprietor: **CSELT Centro Studi e Laboratori
Telecomunicazioni S.p.A.
Via Guglielmo Reiss Romoli, 274
I-10148 Turin (IT)**

(72) Inventor: **Di Tria, Paolo
C.so. Sebastopoli, 310
Turin (IT)**

(74) Representative: **Riederer Freiherr von Paar zu
Schönau, Anton et al
Freyung 615 Postfach 2664
D-8300 Landshut (DE)**

Courier Press, Leamington Spa, England.

## Description

The invention relates to a digital receiver for four-phase differential modulated signals as defined in the prior art portion of claim 1, such receiver being known from US—A 3 535 452.

The invention thus concerns the receiving part of a data-transmission equipment. It serves for use in a frequency-division full-duplex modem operating at high rate for the transmission between telephone subscribers on usual subscribers' loops.

Owing to the progressive expansion of data services offered to the subscribers, by the use of the present networks operating in voice band, the problem arises of developing equipments to be inserted between terminals and transmission line, both at subscriber's and at exchange sides.

Such equipments are to allow full-duplex reception and transmission of high-rate signals: for instance, 64 Kbit/s digital speech, auxiliary services such as slow-video, etc., the 16 Kbit/s signalling and synchronization data.

At the same time, they are to be optimized to cope with the transmission characteristics of the subscriber's loop, whose attenuation expressed in decibels is a function of the frequency square root.

If there are two channels with different frequencies, one for the transmission in one direction and the other for the transmission in the opposite direction, the higher-frequency channel is more attenuated, while the lower frequency channel is affected by greater amplitude dissymmetry within the busy band.

The known systems, even though some of them use frequency division transmission, are based on different methods. In particular no real modulation is effected, but a base band code is transmitted. That is due to the fact that a four-phase modulation generally requires more complex and hence costly systems. In the system known from US—A 3 535 452, no coherent demodulation ca be carried out since the receiver has a local clock which can not be synchronized to the rhythm of signal received, which means that the circuit cannot be employed for high-rate transmissions, e.g. in highspeed synchronous modems. However, by using appropriate circuits, especially in the receiver, such complications can be greatly reduced with consequent advantages. Among said advantages there are to be noted the possibility of controlling channel allocation, and spectrum shaping in order to obtain an optimization of the transmission system in view of the utilized transmission means.

The advantages above are attained by the invention characterized in claim 1 according to which the digital receiver for four-phase differential modulated signals is capable of receiving signals transmitted at a high rate, using the subscriber's loop as a transmission means, and is adaptable to receive different-frequency signals for full-duplex frequency-division communications. By the invention, as stated, a coherent demodulation is effected and the binary samples corresponding to successive dibits are correlated.

The foregoing and other characteristics of the present invention will be made clearer by the following description of a preferred embodiment thereof, given by way of example and not in a limiting sense, and by the annexed drawings, in which:

— Fig. 1 is a general block diagram of the receiver;

— Fig. 2 is a block diagram of the block denoted by TE in Fig. 1;

— Fig. 3 is a block diagram of the block denoted by PL in Fig. 1;

— Fig. 4 is a block diagram of the block denoted by DE in Fig. 1.

In the following example it is supposed that the data transmission is effected at a 80 Kbit/s rate, by using a sinusoidal carrier at 80 KHz for a transmission direction and a sinusoidal carrier at 240 KHz for the other direction. Furthermore as already mentioned, the carriers present four-phase differential modulation, each one of said phases being associated with a dibit.

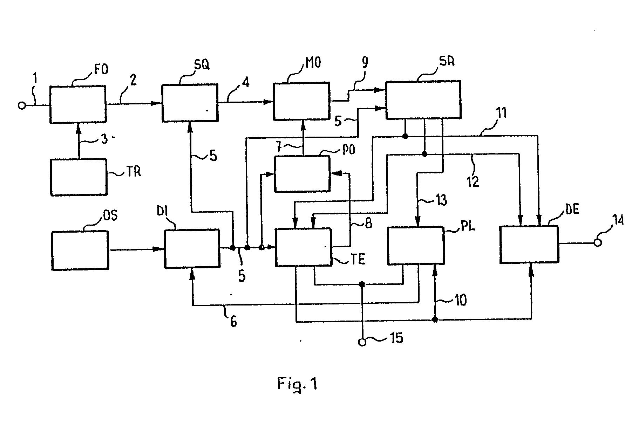

With reference to Fig. 1, reference 1 denotes the subscriber's loop on which the two carriers are simultaneously transmitted and FO denotes a usual hybrid transformer with pass-band filters appropriate for the two frequencies, arranged to allow a reception channel to be transferred from wire 1 to wire 2 and a transmission channel from wire 3 to wire 1. Reference TR denotes the modem transmitting part, whose embodiment is not an object of the present invention.

The phase-modulated sinusoidal carrier of the reception channel arrives through wire 2 at a squaring circuit SQ, which detects its algebraic sign supplying it on wire 4 in form of high or low logic level, at the frequency of clock signal, received via wire 5. This signal is generated by a programmable divider DI, operating on a signal locally-generated by a crystal oscillator OS. To make the signal frequency at the output of DI coincide with the transmitter sampling frequency, the DI division factor can be changed by some units more or less upon command of a phase-locked circuit PL through a wire 6. More details of this circuit will be given hereinafter.

At the SQ output, on wire 4 there is therefore the binary signal used by the remaining part of the receiver; said part consists of digital circuits, clocked by the signal supplied by DI. In the present embodiment, the frequency of said signal can be conveniently set at 640 KHz.

The signal present on wire 4 arrives at a product detector MO, wherein it is multiplied by the local demodulation carrier present on wire 7, arriving from circuit PO. Since both the local carrier and the signal on wire 4 are expressed by one bit only, product detector MO can be easily implemented, for instance by an EX—OR gate. The circuit PO extracts the local digital carrier at a frequency of 80KHz, sampled at 640 KHz, from the clock signal present on wire 5, and receives the information on the phase from timing circuit TE through wire 8. Said information depends both on the frequency, i.e. which of the two channels is received at the moment, and on the phase of the carrier.

In fact, since a coherent demodulation is required, the local carrier phase is to be coherent with the phase of the carrier generated at the transmitting end. PO can be implemented by a presettable 3-bit counter, only the most significant of the three bits being used.

The demodulated signal present on wire 9 is sent to a 16 bit shift register SR, controlled by the clock signal at sampling frequency supplied by DI via wire 5. The register length is chosen equal to 16 bits in accordance with the ratio of the sampling frequency, equal to 640 KHz, and the Baud frequency, equal to 40 KHz, at which the frequency decision are effected. As is known, the above-mentioned frequency of 40 KHz derives from the dibit coding operated at the transmission end on the 80 Kbit/s data stream.

Then, since the shift register SR has the length stated above, and since it is clocked at the sampling frequency, a whole symbol is certainly present in its cells at sampling instants, determined by timing circuit TE.

TE, besides determining in PO the coherent phase for the reception, synchronizes phase-locked circuit PL and decision circuit DE by means of a signal sent via wire 10. Circuit TE, as will be explained hereinafter, uses the information signals extracted from suitable cell groups of SR and transferred to its inputs through multiple connections 11 and 12, while circuit PL extracts the information signals from another cell group of SR, through multiple connection 13, and uses them to control programmable divider DI.

Through wire 15, connected both to TE and PL, the receiver can be preset to receive either the low — or the high — frequency channel.

Decision circuit DE, extracting the information from SR, through connections 11 and 12, supplies the output data on wire 14 at the instants determined by timing circuit TE. Said data correspond with the transmitted ones.

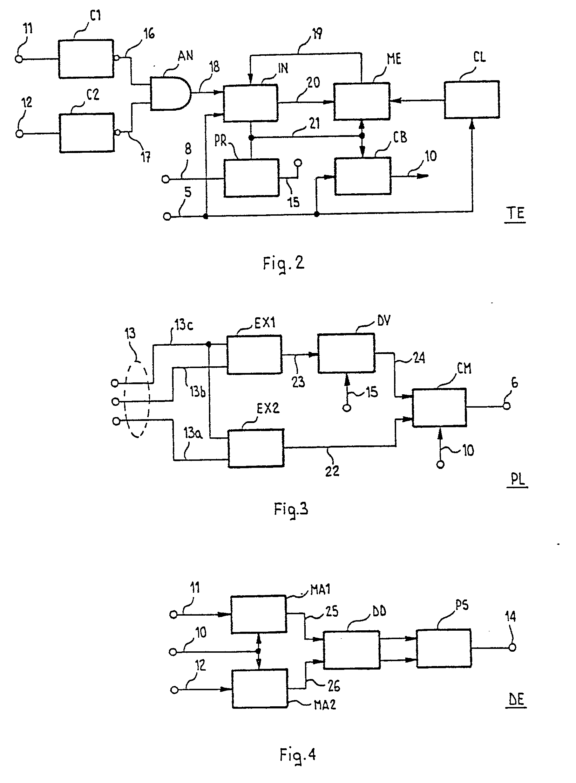

The block diagram of the timing circuit TE is shown in Fig. 2. Its operation depends on the fact that the signal present in the cells of the shift register SR (Fig. 1) alternatively contains information relative to two in-phase and quadrature components of the transmitted symbol, as it can be analytically demonstrated. This information is used to detect suitable sampling instants, determining the instant at which the occurrence of the logic function of equality of the signs relating to the transmitted symbol is more frequent, in an interlacement configuration. In particular, such a function is satisfied by the equality of the signs of the samples contained in the group composed by the first, fifth, ninth and thirteenth cells together with the equality of the samples contained in the group composed by the third, seventh, eleventh and fifteenth cells of the shift register. The function is evaluated for all the 16 possible instants relating to a symbol and its mean value is obtained from more symbols in order to improve its immunity from noise.

In Fig. 2 references C1 and C2 denote two circuits, each able to carry out the logic product of four bits arriving through multiple connections 11 and 12 from the above-mentioned cell groups of shift register RS (Fig. 1). C1 and C2, realized for instance with EX-OR gates having four inputs and a complementary output, present high logic levels at the respective outputs connected to wires 16 and 17 when there is sign equality, and therefore, a high logic level is still present at the output connected to wire 18 of the following AND gate, denoted by AN. The appearance of this high logic level is coincident with the suitable sampling instant.

The signal supplied by AN accesses an adder circuit IN, which adds it to the signal present on wire 19, at the output of a memory device ME. The addition result is sent again to ME through wire 20 and there it occupies the cells where the used addendum, obtained in the same way 16 time intervals before, was stored. When a maximum predetermined threshold, relating to the maximum number of sign equalities found out, has been exceeded, the adder circuit IN emits on wire 21 a signal capable of resetting a Baud counter CB, implemented by a 4-bit counter.

The signal at sampling frequency present on wire 5 clocks both IN and counter CB, which counts freely up to the arrival of the first reset signal on wire 21. From that instant on it generates the Baud frequency at suitable sampling instants and emits the relative output signal on wire 10.

The reset signal present on wire 21 arrives also at a presetting circuit PR, which, in function of the logic level on wire 15, delivers a new information signal on wire 8 connected with circuit PO (Fig. 1), by modifying the coherent demodulation phase.

That allows the receiver to receive the low- or the high-frequency channel, having in accordance with the present embodiment, triple frequency. In fact, since the high-frequency channel has been obtained in the transmitter from the third harmonic of the low-frequency one, some signals must be inverted in order to get the correct polarity. As a consequence, a different demodulation phase is necessary.

As stated hereinbefore, the logic level on wire 15 is in either state depending on the channel which is to be received. In particular, on wire 8 a different binary number will appear in the two cases; said number will be used as start value of the presettable counter in PO (Fig. 1).

Finally the signal on wire 21 is used to reset all the memory cells of ME, which since then begins again to store the results on the sign checks. Its addressing is controlled by an address generator CL, realizable by a 4-bit counter, clocked by the sampling frequency signal present on wire 5.

Fig. 3 shows the block diagram of the circuit denoted by PL in Fig. 1. Its operation is based on the fact that in the presence of symbols whose in-phase and quadrature components have opposite signs, the central symbol sample is proportional to the sine of the phase difference between the arriving wave and the local phase reference. As the sign of this sample is stored in the eighth cell of shift register SR (Fig. 1), it can be used to correct the division factor of DI (Fig. 1) and therefore clock signal frequency. In fact, as it can be analytically demonstrated, when there is a phase shift the sample is not null and therefore its sign results mainly positive or negative depending on the sign of the phase shift itself.

Still with reference to Fig. 3, 13 denotes the multiple connection arriving from the shaft register SR (Fig. 1) composed of wires 13a, 13b and 13c, connected respectively to the seventh, eighth and ninth cells of the register.

Said wires arrive two by two to multipliers EX1, EX2, realized for instance with EX-OR gates. At the output of EX2 on wire 22 there is a high level if the levels on wires 13a and 13c are different, that is if the signs in the seventh and ninth cells of the register are discordant. That implies the presence of a sign transition through the null value contained in the eighth cell, therefore the information therein stored is usable for the successive operations. In this case the multiplier EX2 carries out the product of the sign contained in the eighth cell by that contained in the ninth, delivering on wire 23 the information on the kind of transition through the null value. In particular, the level will be high or low, depending whether there is a transition from a positive to a negative sign or vice versa.

Wire 23 is connected to an inverter DV, which, in function of the voltage level on wire 15, delivers at the output 24 the same signal present on wire 23 or its complement.

This procedure is to be applied in order to take into account the low- or high-frequency channel, which is to be received.

The information on the type of transition is got by averaging a predetermined number of symbols by means of an up/down counter CM. Said counter is enabled to count the high-level signal on wire 22 and is clocked by the signal at Baud frequency on wire 10. The up or down counting is in function of the signal supplied by DV on wire 24 and, therefore, depends on the phase shift sign and on the type of channel received. At the output of counter CM, on wire 6, the correction information to apply to programmable divider DI (Fig. 1) is consequently available.

The decision circuit, which is composed of a proper decision part and of a conventional decoding part, is represented in Fig. 4.

At the suitable sampling instant, determined by the timing circuit TE (Fig. 1) via wire 10, two "majority" circuits MA1 and MA2 supply at their outputs 25 and 26 high- or low-level signals, depending on whether the signs present in the two groups of cells, to which the connections 11 and 12 are linked, are predominantly positive or negative. The signs mentioned above correspond to the projections relating to the transmitted absolute phase.

Should the amounts of positive and negative signs be equal in one of the two groups of cells, the information supplied by the two central cells will prevail, as the relative samples are generally less affected by noise.

The next circuit DD decodes the signals on wires 25 and 26 in order to recover the transmitted dibit, that is serialized by circuit PS so as to restore the originary 80 Kbit/s data stream.

## Claims

1. Digital receiver for four-phase differential modulated signals that had been generated at a transmitting end by sampling at a first frequency a message signal, each one of said four phases being associated with a dibit, the received signal being an analog signal which is subjected to a squaring and sampling operation with a frequency related to the sampling frequency at the transmitting end, the resulting binary sequence representing the signs of the said modulated signal being supplied to a shift register (SR) having a suitable number of cells and converting from series to parallel, selected ones of the parallel bits which come from selected cells of the shift register being used for further demodulation, characterized in that the squaring and sampling operation (in SQ) is carried out clocked by a clock (on 5) locally generated at the first frequency of the transmitter sampling; that a product detector (MO) effects a coherent demodulation operation on the sampled and squared signals by using a phase-controlled signal (on 7) at a second locally generated frequency, a phase-control signal (on 8) or the phase thereof being obtained by a timing circuit (TE) which operates to obtain (in AN) the logic product of the inequality comparison (EX-OR) of a first group of sign-samples (from 11, C1) and the inequality comparison (EX-OR) of a second group of sign-samples (from 12, C2) supplied from the shift register (SR), then to add (in IN) said logic product and the memorized sum of previous logic products relating to the sign-samples having the same position within the dibit, and to define the instant at which a predetermined maximum threshold is exceeded as the optimum sampling instant in which the probability of finding all the sign-samples relating to one dibit in the number of cells is maximum, a Baud counter (CB) being reset at this instant.

2. Receiver according to claim 1, characterized in that the timing circuit (TE) further clocks at a third frequency equal to the Baud frequency a phase-locked circuit (PL) and a decision circuit (DE) by means of the signal supplied by said Baud counter (CB) at its output (10).

3. Receiver according to claim 2, characterized in that the phase-locked circuit (PL) is capable of detecting the difference between the first locally generated frequency and the first frequency at the transmitting end and of generating an error signal by which the division factor of a programmable divider (DI) is modifiable, said phase-locked circuit operating so as to obtain the product between the sign-sample in the central position within the received dibit and the adjacent sign-sample to extract a first information on the phase error and operating also so as to obtain the product between said adjacent-sign sample and the sign-sample which is still adjacent to the central one but in symmetrical position, to extract a second information enabling the counting of said phase error samples by means of an up/down counter (CM), whose end-of-count signal determines the actual correction to make to the control data at the preset inputs (6) of the programmable divider (DI).

4. Receiver according to claim 2, characterized in that the decision circuit (DE), clocked by said timing circuit (TE), is able to determine which are the signs that more frequently appear in said first and second group and, depending on the two signs obtained, to recover the transmitted dibit and by a parallel-to-series conversion to restore the original data stream.

5. Receiver according to claim 3, characterized in that, in order to enable the reception of different-frequency signals, it is equipped with a presetting circuit (PR) arranged to change the phase of the employed signal for said coherent demodulating operation, and with an inverter (DV) arranged to invert the sign of said first information.

## Revendications

1. Récepteur numerique pour signaux transmis en modulation de phase differentielle a quatre etats, a chacun desquels est associe un dibit, qui ont ete engendres du cote emission en effectuant sur un signal de message une opération d'échantillonnage à une première fréquence, le signal reçu étant un signal analogique sur lequel on effectue une opération de limitation et d'échantillonnage à une fréquence corrélée à la fréquence d'échantillonnage du côté emission, la séquence binaire ainsi obtenue représentative des signes dudit signal modulé étant fournie à une registre à décalage (SR), qui a un nombre approprié de cellules et est capable de transformer de série en parallèle, sélectionnes des bits parallèles qui arrivent de cellules sélectionnées du registre à décalage étant employé pour une ultérieure démodulation, caractérisé en ce que l'opération d'échantillonnage et limitation (en SQ) est effectuée à l'aide d'un signal d'horloge (sur 5) engendré localement à une fréquence égale à la première fréquence d'echantillonnage de l'émetteur; en ce qu'un circuit multiplicateur (MO) effectue une opération de démodulation cohérente sur les signaux échantillonnés et limités en employant un signal de phase contrôlée (sur 7) engendré localement à une deuxième fréquence, un signal (sur 8) à contrôler la phase ou sa phase étant obtenus par un circuit d'horloge (TE), qui opère de façon à obtenir (en AN) le produit logique de la comparaison d'inégalité (EX-OR) d'un premier groupe d'échantillons des signes (de 11, C1) et la comparaison d'inégalité (EX-OR) d'un deuxième groupe d'échantillons des signes (de 12, C2), fournis, par le registre à décalage (SR), puis à additionner (en IN) ledit produit logique à la somme mémorisée des précedents produits logiques relatifs aux échantillons de signe ayant la même position entre le dibit, et à définir l'instant auquel l'on dépasse un seuil maximal prédéterminé comme l'instant d'échantillonnage optimal où la probabilité de trouver tous les échantillons des signes relatifs à un seul dibit dans ledit mobre de cellules est maximale, un compteur de Band (CB) étant remis à zéro audit instant.

2. Récepteur suivant la revendication 1, caractérisé en ce que le circuit d'horloge (TE) en outre synchronise à une troisième fréquence égale à la fréquence de Baud un circuit à verrouillage de phase (PL) et un circuit de décision (DE) à l'aide du signal reçu dudit compteur de Band (CB) à sa sortie (10).

3. Récepteur suivant la revendication 2, caractérisé en ce que le circuit à verrouillage de phase (PL) est capable de détecter la différence entre ladite première fréquence engendrée localement et la première fréquence du côté émission, et d'engendrer aussi un signal d'erreur apte à modifier le module de division d'un diviseur programmable (DI), ledit circuit à verrouillage de phase opérant de façon à obtenir le produit entre l'échantillon du signe relatif à la position centrale dans le dibit reçu et l'échantillon du signe contigu pour obtenir une première information sur l'erreur de phase, et opérant aussi de façon à obtenir le produit entre ledit échantillon du signe contigu et l'échantillon du signe qui est encore contigu à l'échantillon central, mais en position symétrique, pour obtenir une deuxième information de validation au comptage desdits échantillons d'erreur de phase à l'aide d'un compteur décompteur (CM), dont le signal de fin de comptage détermine la correction réelle à apporter aux données de contrôle aux entrées de programmation (6) du diviseur programmable (DI).

4. Récepteur suivant la revendication 2, caractérisé en ce que le circuit de décision (DE), synchronisé par ledit circuit d'horloge (TE), est apte à déterminer quels sont les signes qui apparaissent en nombre le plus élevé dans lesdits premier et deuxième groupes, et, sur la base des deux signes obtenus, à reconstruire le dibit transmis et, à l'aide d'une conversion parallèle-série, à rétablir le flux binaire d'origine.

5. Récepteur suivant la revendication 3, caractérisé en ce que, pour recevoir des signaux à différente fréquence, il comprend un circuit de prépositionnement (PR) agencé pour modifier la phase du signal employé pour ladite opération de démodulation cohérente, et un invertisseur (DV) pour inverser le signe de ladite première information.

**Patentansprüche**

1. Digitalempfänger für Signale mit differentieller Vierphasenmodulation, die an einer Senderseite durch Abtasten eines Nachrichtensignals mit einer ersten Frequenz erzeugt wurden und bei denen jeder der vier Phasen ein Dibit zugeordnet ist, wobei das empfangene Signal ein Analogsignal ist, das einer Rechteckverlaufbildungs- und Abtastoperation mit einer auf die Abtastfrequenz auf der Senderseite bezogenen Frequenz unterworfen wird, die resultierende binäre Folge, die die Vorzeichen des modulierten Signals darstellt, einem serien/parallelumsetzenden Schieberegister (SR) mit einer entsprechenden Zahl von Zellen eingespeist wird und ausgewählte der parallelen Bits, die von ausgewählten Zellen des Schieberegisters kommen, für die weitere Demodulation verwendet werden, dadurch gekennzeichnet, daß die Rechteckbildungs- und Abtastoperation (in SQ) unter Taktung durch eine Takt (5), der örtlich mit der ersten senderseitigen Abtastfrequenz erzeugt wird, durchgeführt wird; und daß ein Produktdetektor (MO) einen kohärenten Demodulationsvorgang der abgetasteten und rechteckgebildeten Signale durch Verwendung eines phasengeregelten Signals (auf 7) bei einer zweiten örtlich erzeugten Frequenz bewirkt, wobei ein Phasensteuersignal (auf 8) oder dessen Phase durch eine Zeitsteuerschaltung (TE) erhalten wird, die das logische Produkt des Ungleichheits-Vergleichs (EX-OR) einer ersten Gruppe von Vorzeichenabtastwerten (von 11, C1) und des Ungleichheits-Vergleichs (EX-OR) einer zweiten Gruppe von Vorzeichen-Abtastwerten (von 12, C2), die vom Schieberegister (SR) geliefert werden, bildet (in AN), dann das logische Produkt und die gespeicherte Summe von vorhergehenden logischen Produkten, die sich auf die die selbe Position innerhalb des Dibits aufweisenden Vorzeichen-Abtastwerte beziehen, addiert (in IN) und den Zeitpunkt festlegt, zu dem eine vorgegebene Maximalschwelle als der optimale Abtastzeitpunkt überschritten wird, in dem die Wahrscheinlichkeit, alle der Zeichen-Abtastwerte, die sich auf ein Dibit beziehen, in der Anzahl der Zellen zu finden, maximal ist, wobei ein Baud-Zähler (CB) zu diesem Zeitpunkt zurückgestellt wird.

2. Empfänger nach Anspruch 1, dadurch gekennzeichnet, daß die Zeitsteuerschaltung (TE) weiterhin mit einer dritten Frequenz gleich der Baud-Frequenz eine phasenverriegelte Schaltung (PL) und eine Entscheidungsschaltung (DE) mit Hilfe des Signals taktet, das vom Baud-Zähler (CB) an seinem Ausgang (10) abgegeben wird.

3. Empfänger nach Anspruch 2, dadurch gekennzeichnet, daß die phasenverriegelte Schaltung (PL) den Unterschied zwischen der ersten örtlich erzeugten Frequenz und der ersten senderseitigen Frequenz feststellt und ein Fehlersignal zum Verändern des Teilungsfaktors eines programmierbaren Teilers (DI) erzeugt und so arbeitet, daß das Produkt zwischen dem Vorzeichen-Abtastwert in der zentralen Stellung innerhalb des empfangenen Dibits und dem benachbarten Vorzeichen-Abtastwert gebildet wird, um eine erste Information über den Phasenfehler zu extrahieren, und das Produkt zwischen dem benacnbarten Vorzeichen-Abtastwert und dem Abtastwert, der immer noch dem zentralen Abtastwert benachbart, jedoch in symmetrischer Position ist, gebildet wird, um eine zweite Information zu extrahieren, die das Zählen der Phasenfehler-Abtastwerte mit Hilfe eines Aufwärts-Abwärts-Zählers (CM) zu ermöglichen, dessen Zählendesignal die aktuelle an den Steuerdaten durchzuführende Korrektur an den vorgegebenen Eingängen (6) des programmierbaren Teilers (DI) bestimmt.

4. Empfänger nach Anspruch 2, dadurch gekennzeichnet, daß die von der Zeitsteuerschaltung (TE) getaktete Entscheidungsschaltung (DE) ermittelt, welches Vorzeichen öfter in der ersten und in der zweiten Gruppe auftritt, und in Abhängigkeit von den beiden erhaltenen Vorzeichen das übertragene Dibit wiederherstellt und durch eine Parallel/Serien-Umsetzung den ursprünglichen Datenstromrekonstruiert.

5. Empfänger nach Anspruch 3, dadurch gekennzeichnet, daß er zur Ermöglichung des Empfangs von Signalen unterschiedlicher Frequenz eine Voreinstellschaltung (PR) aufweist, die zur Änderung der Phase des verwendeten Signals für den Vorgang der kohärenten Demodulation geschaltet ist, sowie einen das Vorzeichen der ersten Information invertierenden Inverter (DV) aufweist.

Fig. 1

Fig. 2

Fig. 3

Fig. 4